# EUROPEAN PATENT SPECIFICATION

(11) **EP 3 931 928 B1**
(45) Date of publication and mention of the grant of the patent: **27.03.2024**
(21) Application number: 20708560.6
(22) Date of filing: 19.02.2020
(51) Int. Cl.: H02H 5/10, H02H 3/14, H02H 3/16, B60L 3/00, B60L 3/04, B60L 3/12, B60L 53/62

(54) **CONTROLLING AN ELECTRICAL SUPPLY TO AN APPLIANCE**
STEUERUNG EINER ELEKTRISCHEN VERSORGUNG AN EIN GERÄT
COMMANDER UNE ALIMENTATION ÉLECTRIQUE D'UN APPAREIL

(30) Priority: 28.02.2019 GB 201902740
(43) Date of publication of application: 05.01.2022
(73) Proprietor: Myenergi Ltd, Stallingborough, Lincolnshire DN41 8FF (GB)
(72) Inventor: SUTTON, Lee Robert, Stallingborough, Lincolnshire DN41 8FF (GB); RICHARD, Robin Loïc, Stallingborough, Lincolnshire DN41 8FF (GB)
(74) Representative: Dehns
(86) International application number: PCT/GB2020/050387
(87) International publication number: WO 2020/174217

(56) References cited:
- EP-A1- 2 645 512
- CN-U- 204 391 681
- US-A- 5 917 687
- US-A- 6 091 591

## Description

### BACKGROUND OF THE INVENTION

This invention relates to electrical apparatus and to methods for controlling an electrical supply to an appliance. In particular, although not exclusively, it relates to apparatus and methods for protecting users against ongoing electric shocks due to earth-neutral faults in electrical installations.

CN204391681U discloses an earth leakage protective device.

It is desirable, in many electrical installations, for specific parts of the installation to be connected to the Earth's conductive surface, by means of an earthing system or grounding system. Often this earthing is provided for safety purposes, although it can also be functional.

Regulations for earthing systems vary considerably among different countries. Many national regulations closely follow an internationally agreed standard, IEC 60364. This standard distinguishes three different families of earthing arrangements, using the letter codes TN, TT and IT.

The first letter in these codes indicates the connection between the Earth and the power-supply generator or transformer, whilst the second letter indicates how the consumer installation being supplied is earthed, where:
T = a direct Earth connection (from the French terre);
N = a Neutral connection provided by the supply network; and
I = Isolated.

In a TN earthing system one of the points in the generator or transformer is connected to earth, and the consumer installation is connected to earth through this same earth connection. The conductor that connects to exposed metal parts in a consumer's electrical installation is called a "protective earth" wire (or simply an "earth" wire). The conductor that connects to the generator or transformer is called "neutral".

There are three different variants of TN systems, known as TN-S, TN-C and TN-C-S, referring to how the consumer installation is connected to the supply earth, where:
C = a Combined protective earth and neutral conductor; and
S = Separate protective earth conductor and neutral conductor.

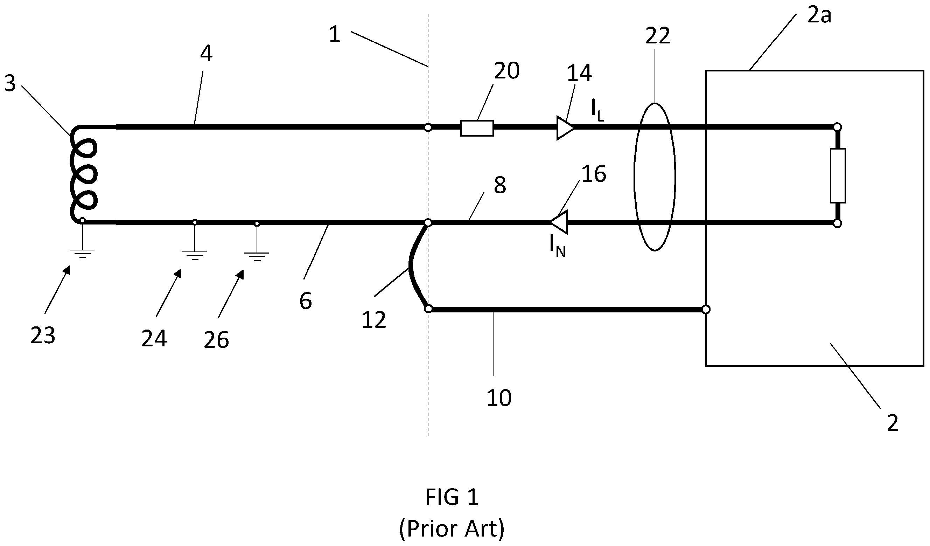

Figure 1 illustrates the TN-C-S system. In some countries, this earthing system may alternatively be referred to as Protective Multiple Earthing (PME), Multiple Earthed Neutral (MEN), or Multi-Grounded Neutral (MGN).

In a TN-C-S supply system a mains electricity supply generator or transformer 3 provides a live supply wire 4 and a combined protective earth and neutral (PEN) conductor 6. The PEN conductor 6 is earthed at a source electrode 23, and is also earthed repeatedly at multiple points 24, 26 along the length of the conductor 6. At the property boundary 1, which is the physical boundary between the distribution network wiring and a residential or commercial installation, this combined protective earth and neutral (PEN) conductor 6 divides into a neutral wire 8 and a protective earth wire 10, which are electrically connected by a link 12, at the service cut-out.

A customer is able to connect an appliance 2, such as an electric vehicle and its charger, to the live wire 4 and the neutral wire 8, in order for power to be supplied to the appliance. A customer is also able to connect the earth wire 10 to the appliance 2 in order to provide earthing protection to the appliance-e.g., to ground a metal chassis 2a of the appliance 2 to earth potential so that it does not present a shock hazard to humans if an electrical fault leads to the live wire 4 becoming electrically connected to the chassis 2a. During normal functioning a current I_{L} 14 will flow through the live wire into the appliance, and the same current will flow out of the appliance as I_{N} 16 and into the PEN wire 6. The live wire 4 contains a fuse or circuit breaker 20 which is arranged to break the circuit if the current I_{L} exceeds a predetermined value for a predetermined period of time. A residual current device (RCD) 22 is also shown connected across the live wire 4 and the neutral wire 8 in order to prevent ongoing electric shocks by breaking the live wire 4 if the returning neutral current I_{N} is different from (e.g. less than) the outward live current I_{L}.

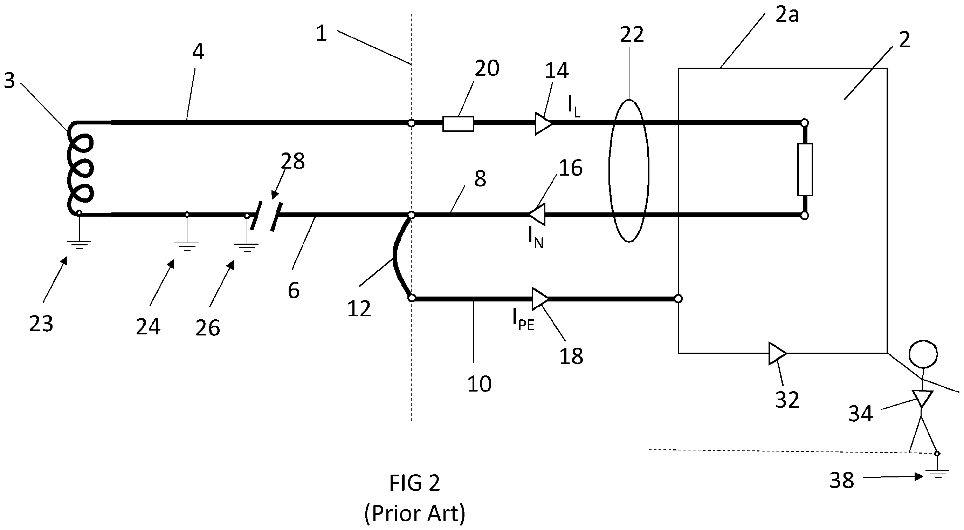

In a TN-C-S earthing system a "broken PEN" fault scenario can occur, as shown in Figure 2 (also referred to as a "broken neutral", "open neutral" or "open circuit PEN").

In this fault scenario a section 28 of the PEN conductor 6 within the distribution network is damaged. Such damage may occur between the boundary 1 of the consumer installation and the nearest earthing point(s) 26 to the consumer installation. As a result of this damaged section 28, there is an inadequate or no return path for the current I_{N} 16 to return to the supply generator or transformer 3 or to earth. In consequence, there is a voltage potential between true earth 38 and the link 12 and earth wire 10, causing any "earthed" part of the appliance 2 to become livepotentially with a voltage as high as the mains supply voltage. If a human user 34 provides a path for current 18 to flow through the earth wire 10 towards the true earth 38, by touching the conductive outside 2a of the appliance 2 while standing on the ground, the current 32 will flow through the appliance and through the user 34, causing an ongoing electric shock to the user 34 and putting the user 34 in danger. The RCD 22 will not trip, because the live and neutral currents remain balanced at the RCD 22. Moreover, the current (and duration) may be sufficiently high as to injure or kill the user 34 without reaching the threshold to trip the fuse or circuit breaker 20.

Although dangerous broken PEN faults are extremely rare, they pose a heightened risk when the appliance 2 is an electric vehicle located outside the walls of the property, compared with appliances located inside the property (where equipotential bonding can minimise the threat of a shock). An electric vehicle, when connected to Electric Vehicle Supply Equipment (EVSE), such as a car charger, typically has substantial earthed metal bodywork 2a. This allows an easy path through a human user 34, who touches the vehicle, to the ground (e.g. damp earth) on which the vehicle is parked.

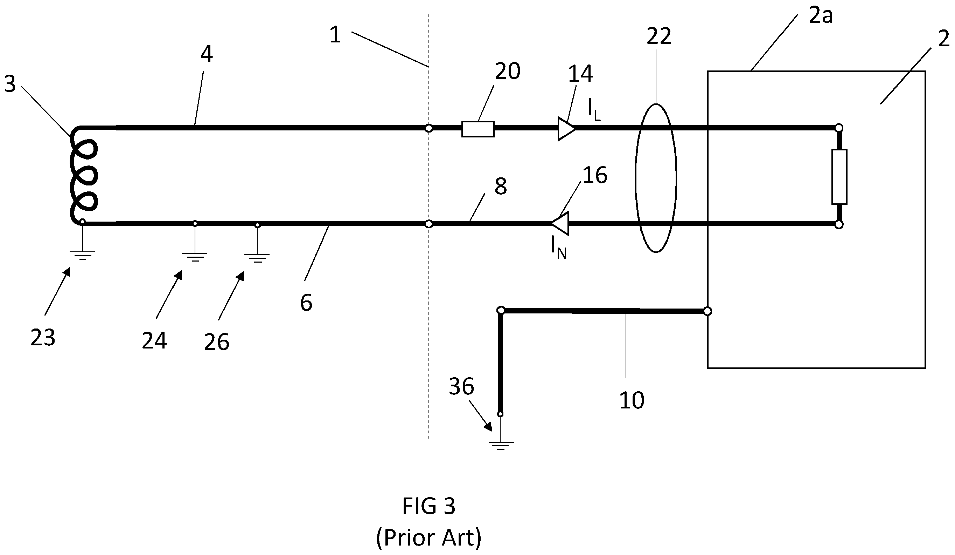

Figure 3 shows a known approach to providing some protection against such a "broken PEN" fault scenario. A local earth arrangement is created by fitting an external earth electrode rod 36 which provides an earth which is local to the consumer. The appliance earth wire 10 is then connected to true earth by connection to this local consumer earth 36. This is known in the art as a TT earthing system. The EVSE will no longer be influenced by faults on the PEN conductor, as it now has its own earth reference. However, installation of these local earths is time consuming and laborious. It can therefore add significant cost to the installation of Electric Vehicle Supply Equipment (EVSE).

Another approach involves monitoring the voltage between the protective earth wire and true earth; if a hazardous voltage difference is detected, the supply (including the protective earth) is isolated automatically. However, this again requires the provision of a local earth electrode, which is undesirable. Such an approach is disclosed in GB2373112A for example.

The present invention provides an approach for mitigating the danger of an earth supply fault, without requiring a local earth connection (although the presence of a local earth connection is not excluded).

### SUMMARY OF THE INVENTION

From a first aspect, the invention provides an electrical apparatus according to claim 1.

From a second aspect, the invention provides a method of controlling an electrical supply to an appliance as claimed in claim 15.

Thus it will be seen that, in accordance with the invention, a flow of current along an earth conductor-such as may occur if a person touches an earthed appliance when there is a broken PEN fault on the electrical supply-results in the disconnection of the appliance from the faulty earth wire. In this way, the possibility of the person experiencing an ongoing electrical shock from the appliance is avoided. Furthermore, the invention also ensures that the appliance is not left connected to the live supply after the earth is disconnected, thereby preventing any shock risk from an electrical failure within the appliance, for example.

The live-wire disconnection means (or module) may be further configured to initiate a disconnection of a neutral wire of the electrical supply to the appliance before or at the same time as the disconnecting of the earth interface-e.g., simultaneously with initiating the disconnection of the live wire. Methods embodying the invention may comprise disconnecting the appliance from a neutral wire of the electrical supply before or at the same time as disconnecting the appliance from the earth wire.

The live-wire disconnection means may, in some embodiments, be configured to initiate a disconnection of a plurality of live wires and/or a plurality of neutral wires, which may be wires of a single electrical supply or of different electrical supplies.

The current sensing means may be a current sensor. It may comprise a current transformer positioned around an earth conductor that is electrically connected to the earth input. The earth conductor may lie along an electrical path between the earth input and the earth interface. The current sensor may be sensitive to currents below 50 mA, 20 mA or 5 mA. The current sensor may provide an analogue or digital signal representative of the current flow to the earth-wire disconnection means and/or to the live-wire disconnection means, which may sample or analyse the signal at regular or irregular intervals.

The earth-wire disconnection condition may require the sensed current flow to exceed a predetermined threshold, which may be a value in the range 10 mA to 30 mA. The threshold may be configurable. The disconnection condition may require the sensed current to be flowing in a direction towards the appliance, or the condition may not take account the direction of the current flow. The disconnection condition may require the sensed current flow to satisfy a criterion, such as exceeding a predetermined threshold, for a predetermined time interval. The time interval may be configurable. In some embodiments the time interval may be set to zero (i.e., as short as possible within the physical and electrical limitations of the apparatus).

The earth-wire disconnection means (or module) may comprise control circuitry configured to determine when the earth-wire disconnection condition is met. The earth-wire disconnection means may comprise analogue and/or digital circuitry. It may comprise a general-purpose processor, such as a microcontroller, for executing software; however, this is not essential.

The live-wire disconnection means may similarly comprise control circuitry, which may overlap with the control circuitry of the earth-wire disconnection means.

The live-wire disconnection means may be configured to initiate the disconnection of the live wire *before* said disconnecting of the earth interface from the earth input-e.g. at a fixed or variable time interval before reconnection of the live wire is initiated and/or completed.

In some embodiments, the live-wire disconnection means is configured to initiate the disconnection of the live wire of the electrical supply in response to the determining that the sensed current flow through the earth input satisfies the earth-wire disconnection condition. The live-wire disconnection means may be configured to initiate the disconnection of the live wire before said disconnecting of the earth interface from the earth input, when the earth-wire disconnection condition is satisfied. Timing means, such as an analogue or digital timer, may be used by the apparatus to provide a time delay between the disconnection of the live wire and the disconnection of the earth interface, once the earth-wire disconnection condition is determined to be met.

In other embodiments, the live-wire disconnection means may be configured to initiate the disconnection of the live wire of the electrical supply in response to the determining that the sensed current flow through the earth input satisfies a live-wire disconnection condition, which may differ from the earth-wire disconnection condition. For example, the live-wire disconnection condition may specify a lower threshold current and/or a shorter time interval than the earth-wire disconnection condition. In this way, it may be ensured that the disconnection of the live wire is initiated before the earth interface is disconnected from the earth input, without requiring an explicit time delay to be measured.

The earth-wire disconnection means may comprise an electrically-operated contactor, actuator, relay, or other electrical switching device.

The appliance may be separate from the electrical apparatus. In this case, the earth interface may be an earth output, for connection to the appliance. The appliance may be or comprise any electrical device or apparatus, such as an electric vehicle, or electric vehicle supply equipment. In some embodiments, the electrical apparatus may be suitable for protecting not just a single appliance but a wiring installation, such as an entire house or other property. In this case, the wiring installation may be connected to the earth interface, and the appliance may be connected to the earth interface only indirectly, through the wiring installation.

Alternatively, the electrical apparatus may comprise the appliance. In other words, the protection mechanism may be built in to the appliance. Some or all of the electrical apparatus may be contained in a housing of the appliance.

In some embodiments, the appliance is or comprises an electric vehicle, or electric vehicle supply equipment, such as a charging station. Electric vehicle supply equipment may include components for converting voltages and/or circuitry for monitoring charging of an electric vehicle and/or safety circuitry and/or means for metering or billing.

When completely integrated within the appliance, embodiments of the invention can offer a reliable level of electrical safety protection, whilst at the same time minimising installation cost and time. When implemented as a separate device, for installation partly or wholly externally to an appliance, the same level of electrical safety protection for the appliance can be provided, but potentially with some additional installation costs, albeit ideally still less than having to install an earth conductor rod.

The appliance may comprise a conductive outer surface which may be connected to the earth interface when the appliance is connected to the earth interface.

The electrical apparatus may comprise reconnection means, such as reconnection circuitry, for reconnecting the earth interface to the earth input, and/or for initiating reconnection of the live wire to the appliance. The reconnection means may be configured to reconnect the earth interface to the earth input before initiating reconnection of the live wire to the appliance-e.g. at a fixed or variable time interval before reconnection of the live wire is initiated and/or completed. This can desirably ensure that an earth connection is established before a supply voltage is applied to the appliance. The reconnection means may also reconnect a neutral wire from the supply to the appliance. The reconnection means may comprise a user interface for initiating reconnection, such as a manual push button switch, relay, actuator or switch. Methods embodying the invention may comprise first reconnecting the appliance to the earth wire of the electrical supply and subsequently reconnecting the appliance to the live wire of the electrical supply (e.g. after a fixed or variable time interval).

The apparatus comprises an interlock for preventing the live wire from being connected to the appliance while the earth interface is disconnected from the earth input. The interlock may comprise an earth switch (e.g., a double-pole contactor), connected between the earth input and the earth interface, and arranged to pass a control signal to cause the live-wire switch (e.g., a further contactor) to close only when the earth switch is closed.

In some embodiments, a live conductor may pass through the electrical apparatus. The electrical apparatus may comprise a live input for connection to a live wire of the electrical supply from the distribution network. It may comprise a live interface for providing a live connection from the live input to the appliance. The live-wire disconnection means may be configured to disconnect the live interface from the live input. It may comprise an electrically-operated contactor, actuator, relay, or other electrical switching device. Any of these features may also apply in respect of a neutral conductor.

In other embodiments, the live-wire disconnection means may be configured to transmit an analogue or digital signal to a separate control apparatus, not part of the electrical apparatus. The separate control apparatus could, for example, be preinstalled electric vehicle supply equipment, to which the electronic apparatus is being retrofitted to improve its electrical safety. The analogue or digital signal may instruct the separate control apparatus to disconnect the appliance from the live wire and/or a neutral wire of the electrical supply.

In other embodiments, the live-wire disconnection means may comprise a mechanical actuator for operating a switch or switching means, not part of the electrical apparatus, for disconnecting the live wire and/or a neutral wire of the electrical supply. The switching means may comprise an electrically-operated contactor, actuator, relay, or other electrical switching device. It may comprise a miniature circuit breaker (MCB) or residual current device (RCD). The mechanical actuator may be an electronicallycontrolled shunt trip.

The electrical apparatus may be configured to output a visual or audible signal (e.g., a message on a display screen) when the earth-wire disconnection condition is satisfied. In this way, a user can be alerted to a potential broken PEN fault on the supply.

The electric apparatus may be connected to the earth wire of a protective earth and neutral (PEN) conductor of a TN-C-S electrical supply.

While timely disconnection of the live wire will be important in many embodiments, there may be situations where this is not essential. Thus, from a further aspect, the invention provides an electrical apparatus comprising:
an earth input for connection to an earth wire of an electrical supply from a distribution network;
an earth interface for providing an earth connection from the earth input to an appliance;
current sensing means for sensing a current flow through the earth input; and
earth-wire disconnection means for disconnecting the earth interface from the earth input when a sensed current flow through the earth input satisfies an earth-wire disconnection condition.

From another aspect, the invention provides a method of controlling an electrical supply to an appliance, comprising:
sensing a current flow through an earth conductor connected between an earth wire, of an electrical supply from a distribution network, and an appliance; and
determining that the sensed current flow satisfies an earth-wire disconnection condition and, in response, disconnecting the appliance from the earth wire of the electrical supply.

Features disclosed herein with reference to the earlier aspects may be optional features of embodiments of these aspects also. In particular, the appliance may comprise EVSE, and may be incorporated with the electrical apparatus or separate from the electrical apparatus.

It will be appreciated that references to a "connection" herein may refer to an electrical connection, which may be indirect via one or more electrical conductors, and does not necessarily imply a direct physical connection or coupling. It will also be understood that references herein to a "wire" or "conductor" are not limited to a single physical length of wire or other electrical conductor, but may cover a plurality of electrical conductors connected end to end and/or in parallel, potentially with passive or active components, such as fuses, transformers, etc., along their path.

Features of any aspect or embodiment described herein may, wherever appropriate, be applied to any other aspect or embodiment described herein. Where reference is made to different embodiments or sets of embodiments, it should be understood that these are not necessarily distinct but may overlap.

### BRIEF DESCRIPTION OF THE DRAWINGS

Certain preferred embodiments of the invention will now be described, by way of example only, with reference to the accompanying drawings, in which:
Figure 1 is a schematic diagram showing a conventional single-phase TN-C-S supply to a consumer installation.
Figure 2 is a schematic diagram showing a conventional TN-C-S supply to a consumer installation in which a "broken PEN" fault is present.
Figure 3 is a schematic diagram showing a conventional approach to mitigating a "broken PEN" fault, in which a consumer installation is provided with a separate earth.
Figures 4a, 4b and 4c are schematic diagrams showing three different stages in the operation of apparatus embodying the present invention.
Figure 5 is a schematic diagram showing a conventional electric vehicle supply equipment (EVSE).
Figure 6 is a schematic diagram showing an embodiment of the present invention in which an electric shock protection device is integrated within electric vehicle supply equipment (EVSE).
Figure 7 is a schematic diagram showing a variant embodiment, including an interlock mechanism.
Figure 8 is a schematic diagram showing another variant embodiment, in which the control unit is connected to a protected supply source.
Figure 9 is a schematic diagram showing an alternative embodiment in which an electric shock protection device is a separate unit which can be attached to an EVSE.
Figure 10 is a schematic diagram showing a variant embodiment in which the electric shock protection device includes an override device.
Figure 11 is a schematic diagram showing a variant embodiment, in which additional switches are included on the live and neutral wires, controlled by the protection device.
Figure 12 is a schematic diagram showing an alternative embodiment in which an electric shock protection device is included within an electrical installation as a separate device upstream of an EVSE to be protected.

### DETAILED DESCRIPTION

Throughout the figures, like reference numerals have been used for like elements.

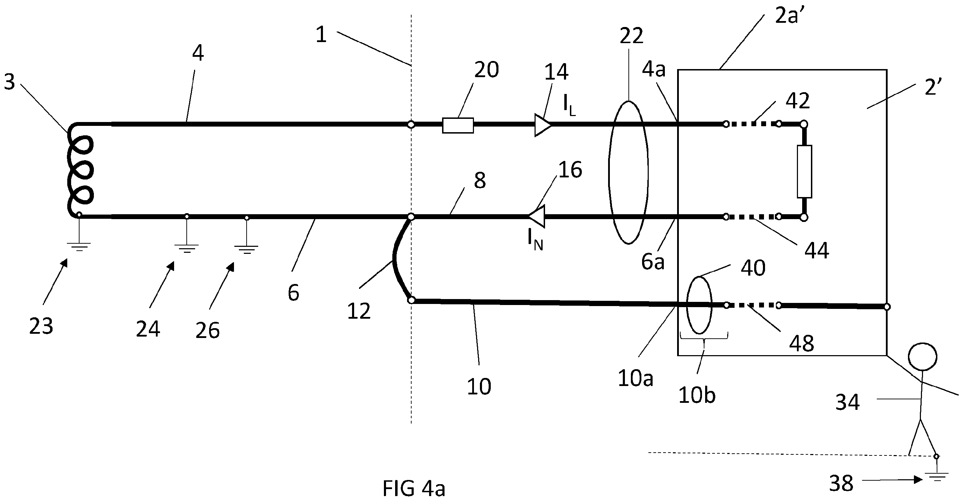

Figures 4a-4c show an electrical apparatus embodying the present invention, in three states which may occur in use. The apparatus protects a user in the event of a "broken PEN" fault, whilst overcoming the shortcomings of the known approaches to this issue.

Figure 4a shows a TN-C-S electrical supply system, as already described with reference to Figure 1, but now connected to an appliance 2' which embodies the invention. The appliance 2' contains a live switch 42, a neutral switch 44 and an earth switch 48. When the appliance 2' is connected to the supply, a live wire 4 of the supply enters the appliance 2' at a live input 4a, a neutral wire 6 of the supply enters the appliance 2' at a neutral input 6a, and a protective earth wire 10 of the supply enters the appliance 2' at an earth input 10a. These inputs may all be located in a removable socket or plug of the appliance 2', or the appliance 2' may be permanently connected such that each input 4a, 6a, 10a is a fixed connection between two conductors, or is a notional point along a continuous conductor (e.g., adjacent an aperture in a casing of the appliance 2'). The live switch 42 is connected to the live wire 4, the neutral switch 44 is connected to the neutral wire 8, and the earth switch 48 is connected to the protective earth wire 10. The earth switch 48 is positioned between the earth input 10a and the earthed chassis 2a' of the appliance 2'.

The appliance 2' also includes a current sensor 40, positioned around an earth conductor 10b within the appliance 2'. The current sensor is thus located along a path between the earth input 10a and the outer casing 2a' of the appliance 2', when the earth switch 48 is closed, and can sense current flowing through the earth input 10a from the protective earth wire 10.

Figure 4a shows the appliance 2' connected to the supply, in a situation in which there is no "broken PEN" fault.

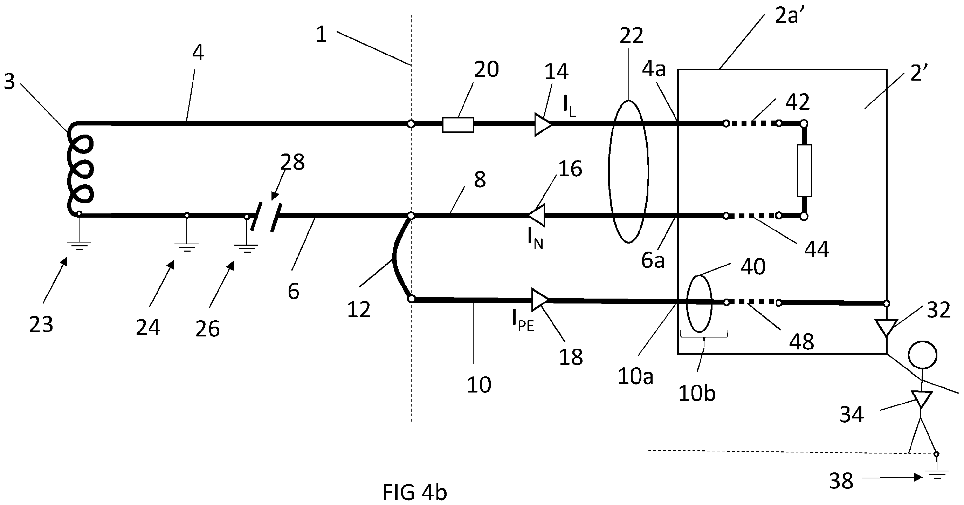

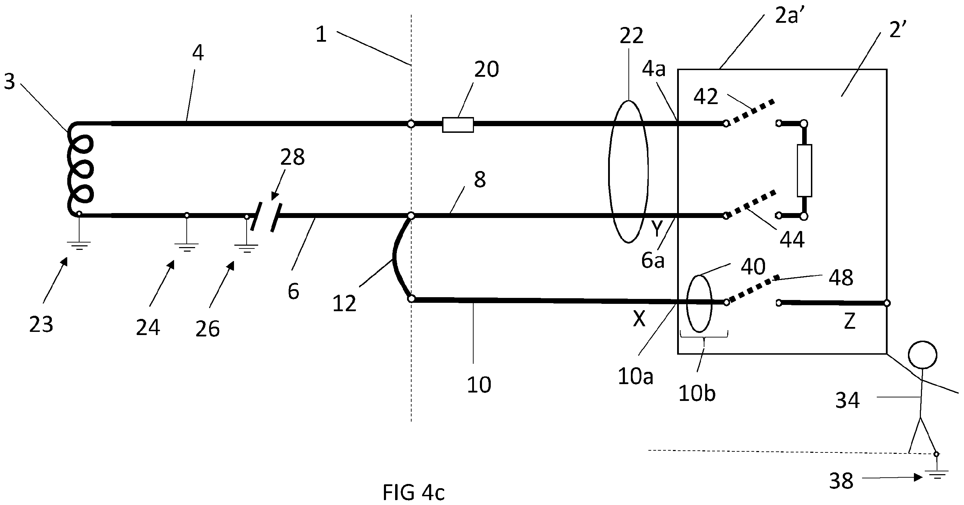

Figure 4b illustrates a scenario in which there is a damaged section 28 present on the PEN conductor 6 and a user 34 touches the "earthed" casing 2a' of the appliance 2'. As described with reference to Figure 2 the PEN fault results in a flow of current I_{PE} 18 through the protective earth wire 10, and therefore a current 32 briefly flows through the user 34 who is connected to true earth 38 and is in contact with the outer casing 2a' of the appliance 2'. However, in contrast to the conventional appliance 2 of Figure 2, the present appliance 2' prevents the user 34 from receiving a dangerous ongoing electric shock due to the fault. In particular, the situation shown in Figure 4b, in which current 32 is flowing through the user 34, persists only momentarily. Before a dangerous amount of charge can flow through the user 34, the appliance 2' transitions to the state shown in Figure 4c.

Figure 4c shows a state in which an ongoing electric shock to the user 34 has been prevented. In the broken PEN fault scenario, the current 18, shown in Figure 4b, briefly flows through the current sensor 40. The current sensor 40 is connected to circuitry (e.g., a microcontroller) that controls the live, neutral and earth switches 42, 44 and 48, such that, when the current exceeds a predetermined threshold, optionally for a predetermined threshold period of time, all of the switches 42, 44, 48 are opened, thereby disconnecting the supply from the appliance and preventing an ongoing shock to the user. Preferably, the live wire 4 and the neutral wire 8 are disconnected before the earth wire 10-e.g. with a predetermined time delay between the disconnections.

As each of the earth switch 48, the neutral switch 44 and the live switch 42 have been opened, no current flows through any of the wires within the appliance 2' in Figure 4c and the user 34 will receive no more than a momentary small shock. These switches 42, 44, 48 provide isolation of the appliance 2' when open. They may each have a minimum contact gap, e.g. rated for isolation to 4000V or more.

The current sensor 40 may comprise a current transformer that has linear sensitivity and a fast response to small currents (in the range 0 mA to 50 mA). It may comprise a commercially-available device marketed as a "zero current" transformer or a "zerophase current" transformer. The current sensor 40 may provide a quantitative or qualitative measure of current (analogue or digital) to control circuitry, for determining when the current exceeds the predetermined threshold.

If the appliance 2' is located in the UK, the mains supply is nominally at 230V, or possibly up to 400V due to the grid being three phase; therefore, due to the PEN fault shown in Figure 4c, point Y of the neutral wire 8 could be at a nominal voltage of approximately 230V. Due to the link 12, point X of the earth wire 10 will therefore also be raised to approximately 230V. In the case where the appliance 2' comprises an outdoor appliance, for example an electric vehicle, the person 34 shown in Figure 4c is standing outside on moist ground and is therefore at approximately true earth i.e. 0V. If the earth switch 48 were not present or were not open, then any conductive exterior 2a' of the appliance 2', which may be metal, would be raised to the same 230V as point X, and therefore if the person 34, who is earthed, touched the appliance, they would receive a very large electric shock. However, since the earth switch 48 is opened momentarily (e.g., within a few milliseconds) after any such touch is made, the point Z on the chassis 2a' will be rapidly isolated from the mains supply 3, therefore preventing a person who touches the appliance from receiving an ongoing shock. The earth switch 48 may be specified to open within 40 ms or quicker.

The advantageous effect of preventing harmful ongoing electric shocks to the user in this instance could be achieved by opening only the earth switch 48. It is important that not only the earth wire 10, but also the live wire 4 and the neutral wire 8 are disconnected in the event of the current in the earth wire 10 exceeding a threshold, in order for the earth wire 10 to perform the normal function of an earth. Consider, for example, if a fault in the live wire 4 were to result in the live wire connecting directly to the casing 2a' of the appliance 2' in normal usage (without any broken PEN fault being present); then a standard earth would conduct this excess voltage away such that the appliance 2' remained grounded and therefore safe to touch. However, at least in some embodiments of the present invention, the current sensor 40 and associated control circuitry (together providing a current condition sensing module) may not distinguish between positive and negative currents, so a sufficiently high current in the earth wire, even in a direction *towards* the PEN conductor 6, would result in the earth switch 48 opening, so that the earth wire 10 was no longer conducting.

In this instance, if only the earth wire 10 were disconnected then the faulty live wire 4 would raise the voltage of the outer casing 2a' of the appliance 2', and thereby put a person 34 at risk if they were to touch the appliance 2'. It is therefore advantageous that the appliance 2' be configured also to disconnect the live wire 4, and optionally to disconnect the neutral wire 8, so that the earth wire 10 also performs the standard function of an earth and keeps the appliance 2' safe in the event of a live wire fault.

Preferably, the device is configured so that the live switch 42 is opened *before* the earth switch 48. Optionally the neutral switch 44 is also opened *before* the earth switch 48. If the earth wire 10 were disconnected first, with the live wire 4 still connected, then there could be a voltage on the chassis 2a', if there were a wiring fault, since the live wire 4 would still be connected to the appliance 2'. Similarly, when restoring the supply, the earth switch 48 is closed *before* the live switch 42 and neutral switch 44 are closed. This isolation and restoration sequence may be implemented with timing delays, generated by hardware circuitry, or by the means of one or more integrated programmable components or by any other suitable engineering technique. Additionally, an interlock is provided to ensure that the sequence is followed, as described in more detail below.

In a preferred set of embodiments, the appliance 2' of Figures 4a-4c may not be a single appliance, such as an electric car, but may instead comprise one or more components, such as an electric vehicle supply equipment (EVSE) and/or a standalone protection device for the EVSE, either of which may implement principles of the invention, and/or an electric vehicle. Various possible embodiments are described in more detail below. However, it will be appreciated these are not exhaustive.

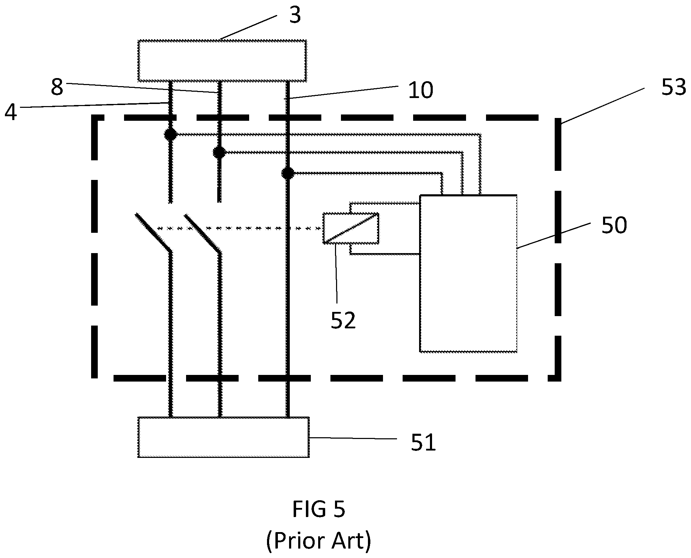

Figure 5 shows a standard electric vehicle supply equipment (EVSE) 53 for charging an electric vehicle, such as a family car. A mains electricity supply 3 is connected to an electric vehicle 51, through the EVSE 53, by a live wire 4, a neutral wire 8, and a protective earth wire 10.

A control unit 50 controls a double-pole contactor 52 (an electrically-controlled switch) which can connect and disconnect the live wire 4 and the neutral wire 8 simultaneously.

When it is desired to supply current to charge the connected electric vehicle, the control unit 50 signals the contactor 52 to close, and thus the electric vehicle battery recharge session starts. The signalling may be digital or analogue. In such a device, known in the art, there is no protection against a "broken PEN" fault, so expensive countermeasures are required, such as installing a local earth or providing a large isolation transformer.

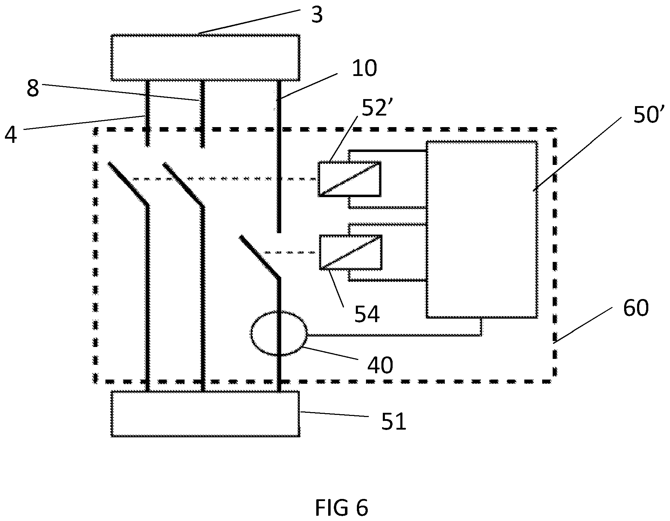

Figure 6 shows an EVSE device 60 embodying the present invention. In addition to the components as described with reference to Figure 5, and shown in Figure 6 with corresponding reference numerals, the EVSE device 60 contains a current sensor 40, and a single-pole earth contactor 54. In the embodiment of Figure 6 these components are all included within an outer housing of the EVSE device 60.

The control unit 50' of the EVSE device 60 may be voltage-dependent, receiving a supply from the mains supply 3, or it could be voltage-independent (e.g., being battery powered). It may be entirely analogue or may include digital logic such as one or more microcontrollers or ASICs. The control unit 50' and earth contactor 54 together constitute earth-wire disconnection means as disclosed above.

In the event that the current in the earth wire 10 exceeds a preset threshold, optionally for more than a preset threshold period of time, this is detected by the control unit 50' based on current measurements obtained from the current sensor 40. The control unit 50' signals the double-pole live and neutral contactor 52' to open, so that the appliance is no longer supplied with power. The control unit 50' and live and neutral contactor 52' together constitute live-wire disconnection means as disclosed above. The control unit 50' also signals the earth contactor 54 to open, preferably a short delay after the live and neutral contactor 52' has opened.

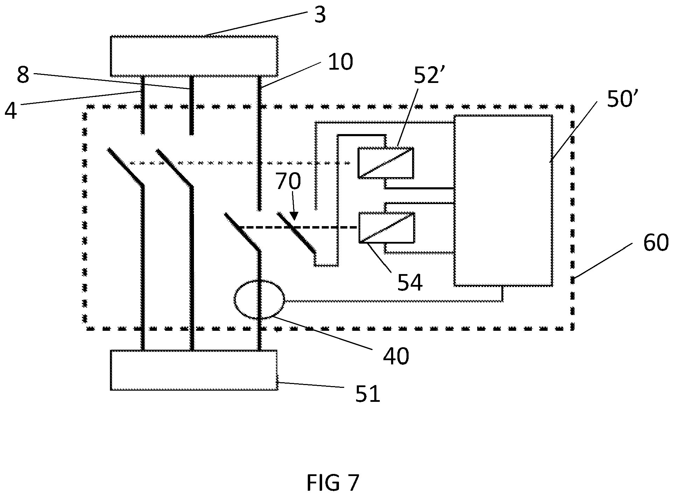

Figure 7 shows a variation of the embodiment of Figure 6. Many elements of the device are the same as in Figure 6, and are therefore labelled with the same reference numerals, however the EVSE device 60 of Figure 7 differs from the EVSE device 60 of Figure 6 in that it further includes an interlock mechanism 70. The interlock mechanism 70 uses a double-pole earth contactor 54, one pole of which switches the earth wire 10, with the other pole being wired in series with the control line of the live and neutral contactor 52. In this way, the live and neutral contactor 52 can be closed only if the earth contactor 54 is already closed. This means that the live and neutral wires 4, 8 can be connected to the vehicle 51 only when the earth wire 10 is already connected to the vehicle 51. This provides failsafe protection in case of a mechanical or electrical fault in the normal connection sequencing implemented by the controller 50'.

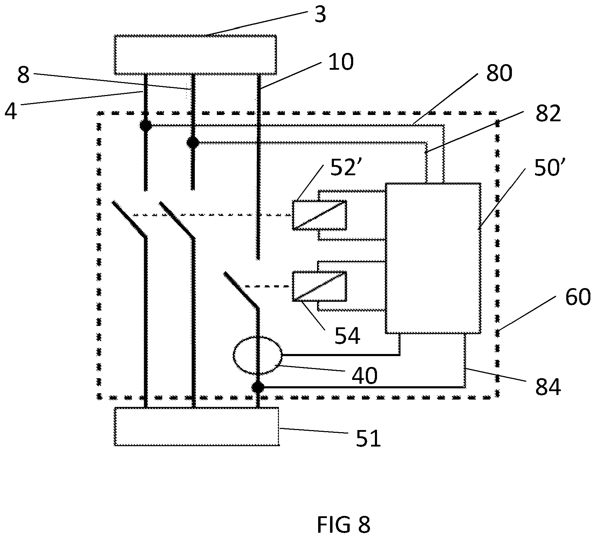

Figure 8 shows a further variant embodiment in which the control unit 50' has a connection 80 to the live wire 4 and a connection 82 to the neutral wire 8. This provides power to the circuitry (e.g., processors etc.) in the control unit 50' and for operating the contactors 52', 54. Furthermore, the control unit 50' is connected to the earth wire 10 by a connection 84, downstream of the earth contactor 54 and the current sensor 40. This earth connection 84 can be used to earth the device 60, but also provides a reference to the control unit 50' for monitoring the supply to the vehicle 51. In this way, the power supply to the control unit 50' will never have an earth that is held at the live potential in the case of a broken PEN fault. To increase the safety of the device 60 when the earth contactor 54 is open, the connections 80, 82 preferably provide galvanic isolation of the control unit 50' from the supply 3-e.g., using a transformer, such as a transformer within an AC-to-DC power supply. Such isolation may be used in any of the embodiments disclosed herein that power the control unit from the main supply (rather than from a separate battery, for example).

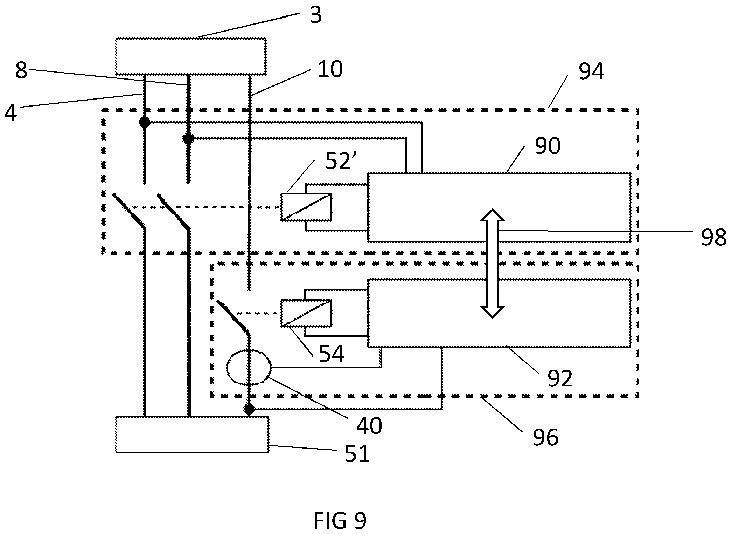

Figure 9 shows an alternative embodiment in which a protection device 96 embodying the invention is not integrated within an EVSE device (i.e. in the same housing), but is attached to an electrical supply system to which a separate EVSE 94 is also installed. Such an arrangement is suitable for retrofitting to a pre-existing EVSE 94. The EVSE 94 includes a charging control unit 90, which in turn controls a live and neutral contactor 52', which controls the live and neutral supply to the vehicle 51.

The separate protection device 96 includes a protection control unit 92. As previously described, when the current in the earth wire 10 exceeds a threshold value, the protection control unit 92 causes an earth contactor 54 to disconnect the earth wire 10 from the vehicle 51. In this embodiment when the current in the earth wire 10 exceeds the threshold value the protection control unit 92 additionally transmits a signal 98 to the charging control unit 90, which causes the charging control unit 90 to open the live and neutral contactor 52' so that the live and the neutral wire are no longer connected to the vehicle 51. The signal 98 may be sent over a digital interface (e.g., USB) or over an analogue interface. In this way, the protection control unit 92 can also control the timing and order of the opening (and the closing) of the contactors 52', 54 as previously described.

In Figure 9, the protection device 96 is positioned between the EVSE 94 and the vehicle 51. However, it could alternatively be positioned between the EVSE 94 and the supply 3.

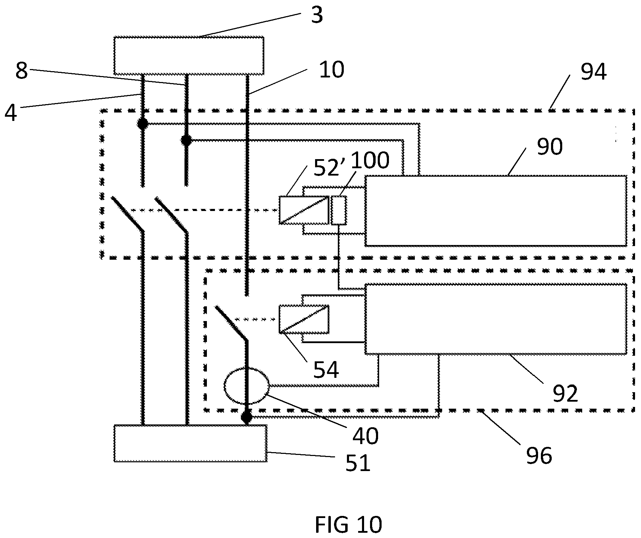

Figure 10 shows a variation of the embodiment shown in Figure 9. In this embodiment, in addition to the elements already described with reference to Figure 9, the protection control unit 92 provides a physical override device 100, instead of the electrical signalling between the protection device 96 and the EVSE 94. The override device 100 is physically installed within the EVSE 94 (e.g., during a retrofitting) but is controlled from the protection device 96. It is connected to the live and neutral contactor 52' in the EVSE 94 using auxiliary contactors, or mechanically linked contactors, for example a shunt trip. In the event of the current in the earth wire 10 exceeding a threshold, the protection control unit 92 transmits a signal to the override device 100, which can override the EVSE's control of the live and neutral contactor 52' to force the contactor 52' open. Override device 100 is configured to be able to override the charging control unit 90, which normally controls the charging switches, so that the switches of the live and neutral wires 4, 8 can be disconnected in case of a broken PEN fault, and cannot be reconnected until the override device 100 allows it. As before, the protection control unit 92 may ensure that the live and neutral contactor 52' is opened before the earth contactor 54 is opened, and is closed only after the earth contactor 54 is closed.

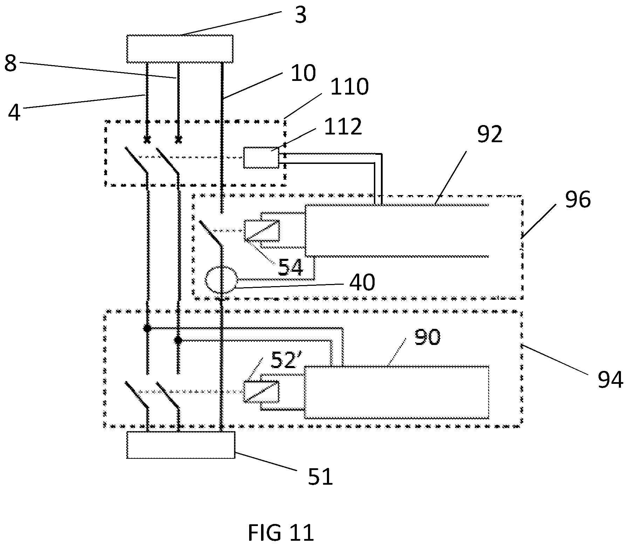

Figure 11 shows an alternative to the arrangement described with reference to Figure 10. In this embodiment a separate external unit 110, which may be a DIN Rail component assembly, is installed between the supply 3 and the EVSE 94. The external unit 110 contains a double-pole miniature circuit breaker (MCB), connected to live and neutral, and a shunt trip 112 for tripping the MCB. The shunt trip 112 is controlled by leads extending from the protection control unit 92 of the protection device 96. In this way, when the current sensor 40 senses a current in the earth wire 10 which exceeds a threshold level for a threshold time, the protection control unit 92 transmits a signal to the shunt trip 112 in the external unit 110, which isolates the live and neutral supplies. Such an embodiment may be attractive where it is undesirable or impossible to interface with an existing EVSE 94 as shown in Figure 9, or to install an override device 100 as shown in Figure 10, since it requires no additional connections to the EVSE 94.

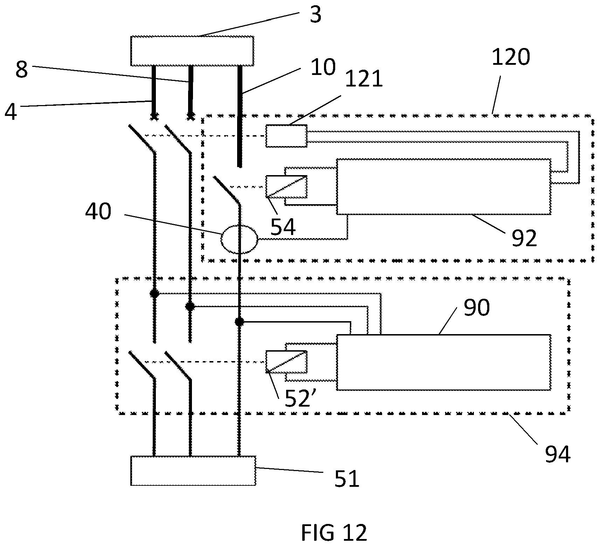

Figure 12 shows a standalone protection device 120 embodying the invention. This is electrically connected upstream of a conventional EVSE device 94 which is desired to be protected. This standalone protection device 120 provides a shunt trip 121 which can be used to control an existing miniature circuit breaker (MCB) or residual current device (RCD) to disconnect the live wire 4 and neutral wire 8 when the current sensor 40 detects current above a threshold level on the earth wire 10. Alternatively, rather than controlling an existing MCB or RCD, an external live and neutral contactor may be fitted alongside the standalone protection device 120.

With any of these embodiments, it will be appreciated that the same principles can be used to protect any appliance or apparatus, not just an electric vehicle supply equipment (EVSE) charge point, or could even be used to protect a whole property or other wiring installation. For example, the electric vehicle 51 could be substituted for any appliance or apparatus in the embodiments described above.

In some embodiments the disconnection conditions may be more complex than a simple threshold level-e.g., depending additionally or alternatively on a rate of change of current, or one or more other factors.

It will be appreciated by those skilled in the art that the invention has been illustrated by describing one or more specific embodiments thereof, but is not limited to these embodiments; many variations and modifications are possible, within the scope of the accompanying claims.

## Claims

1. An electrical apparatus comprising:
an earth input (10a) for connection to an earth wire (10) of an electrical supply from a distribution network;
an earth interface for providing an earth connection from the earth input (10a) to an appliance (2');
current sensing means (40) for sensing a current flow through the earth input (10a);
earth-wire disconnection means (48, 50', 54) for disconnecting the earth interface from the earth input (10a) when a sensed current flow through the earth input satisfies an earth-wire disconnection condition; and
live-wire disconnection means (42, 52') for initiating a disconnection of a live wire (4) of the electrical supply to the appliance (2') before or at the same time as the disconnecting of the earth interface; and
**characterized by** further comprising an interlock (70) for preventing the live wire (4) from being connected to the appliance (2') unless the earth interface is already connected to the earth input (10a).

2. The electrical apparatus of claim 1, comprising a live-wire switch (42) for connecting the live wire (4) to the appliance (2'), wherein the interlock (70) comprises an earth switch (48), between the earth input (10a) and the earth interface, and wherein the earth switch (48) is arranged to allow a control signal, for causing the live-wire switch (42) to close, to pass only when the earth switch (48) is closed.

3. The electrical apparatus of claim 1 or 2, wherein the appliance (2') is an electric vehicle or is electric vehicle supply equipment.

4. The electrical apparatus of any preceding claim, wherein the earth-wire disconnection condition requires the sensed current flow to exceed a predetermined threshold.

5. The electrical apparatus of any preceding claim, wherein the live-wire disconnection means (42, 52') is configured to initiate the disconnection of the live wire (4) of the electrical supply in response to determining that the sensed current flow through the earth input satisfies the earth-wire disconnection condition.

6. The electrical apparatus of any preceding claim, configured to initiate the disconnection of the live wire (4) before disconnecting the earth interface (10a) from the earth input (10a).

7. The electrical apparatus of any preceding claim, comprising reconnection means for reconnecting the earth interface to the earth input (10a), and for initiating reconnection of the live wire (4) to the appliance, wherein the reconnection means is configured to reconnect the earth interface to the earth input (10a) before initiating reconnection of the live wire to the appliance (2').

8. The electrical apparatus of any preceding claim, further comprising:
a live input (4a) for connection to a live wire (4) of the electrical supply from the distribution network; and
a live interface for providing a live connection from the live input (4a) to the appliance (2'),
wherein the live-wire disconnection means is configured to disconnect the live interface from the live input (4a) before or at the same time as the disconnecting of the earth interface from the earth input (10a).

9. The electrical apparatus of any of claims 1 to 7, wherein the live-wire disconnection means is configured to transmit an analogue or digital signal to a separate control apparatus, not part of the electrical apparatus, for instructing the separate control apparatus to disconnect the appliance (2') from the live wire of the electrical supply.

10. The electrical apparatus of any of claims 1 to 7, wherein the live-wire disconnection means (42, 52') comprises a mechanical actuator for operating switching means, not part of the electrical apparatus, for disconnecting the live wire (4) of the electrical supply.

11. The electrical apparatus of any preceding claim, wherein the earth-wire disconnection means comprises an electrically-operated contactor, actuator or relay.

12. The electrical apparatus of any preceding claim, wherein the earth-wire disconnection means (48, 50', 54) and the live-wire disconnection means (42, 52') comprise control circuitry configured to receive a signal from the current sensing means and to determine when the sensed current satisfies the earth-wire disconnection condition.

13. The electrical apparatus of any preceding claim, configured to output a visual or audible signal when the earth-wire disconnection condition is satisfied.

14. The electric apparatus of any preceding claim, configured for connection to the earth wire of a protective earth and neutral (PEN) conductor of a TN-C-S electrical supply.

15. A method of controlling an electrical supply to an appliance, comprising:
sensing a current flow through an earth conductor (10b) connected between an earth wire (10), of an electrical supply from a distribution network, and an appliance (2');
determining that the sensed current flow satisfies an earth-wire disconnection condition and, in response, disconnecting the appliance from the earth wire (10) of the electrical supply; and
disconnecting the appliance (2') from a live wire (4) of the electrical supply before or at the same time as disconnecting the appliance (2') from the earth wire (10); and
**characterized by** preventing, by an interlock (70), the appliance (2') from being connected to the live wire (4) of the electrical supply until after the appliance (2') has been connected to the earth wire (10) of the electrical supply.

## Patentansprüche

1. Elektrische Einrichtung, umfassend:
einen Masseeingang (10a) zum Verbinden mit einem Massedraht (10) einer elektrischen Versorgung aus einem Verteilnetz;
eine Masseschnittstelle zum Bereitstellen einer Masseverbindung vom Masseeingang (10a) zu einem Gerät (2');
Stromerfassungsmittel (40) zum Erfassen eines Stromflusses durch den Masseeingang (10a);
Massedraht-Trennmittel (48, 50', 54) zum Trennen der Masseschnittstelle vom Masseeingang (10a), wenn ein erfasster Stromfluss durch den Masseeingang eine Massedraht-Trennbedingung erfüllt; und
Phasendraht-Trennmittel (42, 52') zum Einleiten einer Trennung eines Phasendrahts (4) der elektrischen Versorgung vom Gerät (2') vor oder gleichzeitig mit dem Trennen der Masseschnittstelle; und
**dadurch gekennzeichnet, dass** sie weiter eine Verriegelung (70) umfasst zum Verhindern, dass der Phasendraht (4) mit dem Gerät (2') verbunden wird, wenn nicht die Masseschnittstelle bereits mit dem Masseeingang (10a) verbunden ist.

2. Elektrische Einrichtung nach Anspruch 1, die einen Phasendrahtschalter (42) zum Verbinden des Phasendrahts (4) mit dem Gerät (2') umfasst, wobei die Verriegelung (70) einen Masseschalter (48) zwischen dem Masseeingang (10a) und der Masseschnittstelle umfasst, und wobei der Masseschalter (48) so eingerichtet ist, dass er ein Steuersignal zum Veranlassen des Schließens des Phasendrahtschalters (42) nur dann durchlässt, wenn der Masseschalter (48) geschlossen ist.

3. Elektrische Einrichtung nach Anspruch 1 oder 2, wobei das Gerät (2') ein Elektrofahrzeug oder eine Elektrofahrzeug-Versorgungsausrüstung ist.

4. Elektrische Einrichtung nach einem vorstehenden Anspruch, wobei die Massedraht-Trennbedingung erfordert, dass der erfasste Stromfluss eine vorbestimmte Schwelle überschreitet.

5. Elektrische Einrichtung nach einem vorstehenden Anspruch, wobei das Phasendraht-Trennmittel (42, 52') so konfiguriert ist, dass es die Trennung des Phasendrahts (4) der elektrischen Versorgung als Reaktion auf das Bestimmen einleitet, dass der erfasste Stromfluss durch den Masseeingang die Massedraht-Trennbedingung erfüllt.

6. Elektrische Einrichtung nach einem vorstehenden Anspruch, die so konfiguriert ist, dass sie die Trennung des Phasendrahts (4) einleitet, bevor sie die Masseschnittstelle (10a) vom Masseeingang (10a) trennt.

7. Elektrische Einrichtung nach einem vorstehenden Anspruch, die Verbindungswiederherstellungsmittel zum Wiederherstellen der Verbindung der Masseschnittstelle zum Masseeingang (10a) und zum Einleiten der Wiederherstellung der Verbindung des Phasendrahts (4) zum Gerät umfasst, wobei das Verbindungswiederherstellungsmittel so konfiguriert ist, dass es die Verbindung der Masseschnittstelle zum Masseeingang (10a) wiederherstellt, bevor sie die Wiederherstellung der Verbindung des Phasendrahts zum Gerät (2') einleitet.

8. Elektrische Einrichtung nach einem vorstehenden Anspruch, weiter umfassend:
einen Phaseneingang (4a) zum Verbinden mit einem Phasendraht (4) der elektrischen Versorgung aus dem Verteilnetz; und
eine Phasenschnittstelle zum Bereitstellen einer Phasenverbindung vom Phaseneingang (4a) zum Gerät (2'),
wobei das Phasendraht-Trennmittel so konfiguriert ist, dass es die Phasenschnittstelle vor oder gleichzeitig mit dem Trennen der Masseschnittstelle vom Masseeingang (10a) vom Phaseneingang (4a) trennt.

9. Elektrische Einrichtung nach einem der Ansprüche 1 bis 7, wobei das Phasendraht-Trennmittel so konfiguriert ist, dass es ein analoges oder digitales Signal an eine separate Steuereinrichtung, die nicht Teil der elektrischen Einrichtung ist, überträgt, zum Anweisen der separaten Steuereinrichtung dazu, das Gerät (2') vom Phasendraht der elektrischen Versorgung zu trennen.

10. Elektrische Einrichtung nach einem der Ansprüche 1 bis 7, wobei das Phasendraht-Trennmittel (42, 52') einen mechanischen Aktor zum Betätigen von Schaltmitteln, die nicht Teil der elektrischen Einrichtung sind, zum Trennen des Phasendrahts (4) von der elektrischen Versorgung umfasst.

11. Elektrische Einrichtung nach einem vorstehenden Anspruch, wobei das Massedraht-Trennmittel ein(en) elektrisch betätigtes/n Schütz, Aktor oder Relais umfasst.

12. Elektrische Einrichtung nach einem vorstehenden Anspruch, wobei das Massedraht-Trennmittel (48, 50', 54) und das Phasendraht-Trennmittel (42, 52') Steuerschaltungen umfassen, die so konfiguriert sind, dass sie ein Signal von den Stromerfassungsmitteln empfangen und bestimmen, wann der erfasste Strom die Massedraht-Trennbedingung erfüllt.

13. Elektrische Einrichtung nach einem vorstehenden Anspruch, die so konfiguriert ist, dass sie ein optisches oder akustisches Signal ausgibt, wenn die Massedraht-Trennbedingung erfüllt ist.

14. Elektrische Einrichtung nach einem vorstehenden Anspruch, die zum Verbinden mit dem Massedraht eines Schutzmasse- und Neutral- (PEN-) Leiters einer elektrischen TN-C-S-Versorgung konfiguriert ist.

15. Verfahren zum Steuern einer elektrischen Versorgung eines Geräts, umfassend:
Erfassen eines Stromflusses durch einen Masseleiter (10b), der zwischen einen Massedraht (10) einer elektrischen Versorgung aus einem Verteilnetz und ein Gerät (2') geschaltet ist;
Bestimmen, dass der erfasste Stromfluss eine Massedraht-Trennbedingung erfüllt, und als Reaktion darauf Trennen des Geräts vom Massedraht (10) der elektrischen Versorgung; und
Trennen des Geräts (2') von einem Phasendraht (4) der elektrischen Versorgung vor oder gleichzeitig mit dem Trennen des Geräts (2') vom Massedraht (10); und
**gekennzeichnet durch** das Verhindern, durch eine Verriegelung (70), dass das Gerät (2') mit dem Phasendraht (4) der elektrischen Versorgung verbunden wird, bis das Gerät (2') mit dem Massedraht (10) der elektrischen Versorgung verbunden wurde.

## Revendications

1. Appareil électrique comprenant :
une entrée de terre (10a) destinée à une connexion à un fil de terre (10) d'une alimentation électrique à partir d'un réseau de distribution ;
une interface de terre destinée à établir une connexion de terre de l'entrée de terre (10a) à un appareil (2') ;
un moyen de détection de courant (40) destiné à détecter un flux de courant à travers l'entrée de terre (10a) ;
un moyen de déconnexion du fil de terre (48, 50', 54) destiné à déconnecter l'interface de terre de l'entrée de terre (10a) lorsqu'un flux de courant détecté à travers l'entrée de terre satisfait une condition de déconnexion du fil de terre ; et
un moyen de déconnexion du fil de phase (42, 52') destiné à initier une déconnexion d'un fil de phase (4) de l'alimentation électrique à l'appareil (2') avant ou en même temps que la déconnexion de l'interface de terre ; et
**caractérisé en ce qu'**il comprend en outre un interverrouillage (70) destiné à empêcher la connexion du fil de phase (4) à l'appareil (2'), sauf si l'interface de terre est déjà connectée à l'entrée de terre (10a).

2. Appareil électrique selon la revendication 1, comprenant un commutateur de fil de phase (42) destiné à connecter le fil de phase (4) à l'appareil (2'), dans lequel l'interverrouillage (70) comprend un commutateur de terre (48), entre l'entrée de terre (10a) et l'interface de terre, et dans lequel le commutateur de terre (48) est agencé pour ne permettre le passage d'un signal de commande, destiné à déclencher la fermeture du commutateur de fil de phase (42), que lorsque le commutateur de terre (48) est fermé.

3. Appareil électrique selon la revendication 1 ou 2, dans lequel l'appareil (2') est un véhicule électrique ou un équipement d'alimentation de véhicule électrique.

4. Appareil électrique selon une quelconque revendication précédente, dans lequel la condition de déconnexion du fil de terre nécessite que le flux de courant détecté soit supérieur à un seuil prédéterminé.

5. Appareil électrique selon une quelconque revendication précédente, dans lequel le moyen de déconnexion du fil de phase (42, 52') est configuré pour initier la déconnexion du fil de phase (4) de l'alimentation électrique en réponse à une détermination indiquant que le flux de courant détecté à travers l'entrée de terre satisfait la condition de déconnexion du fil de terre.

6. Appareil électrique selon une quelconque revendication précédente, configuré pour initier la déconnexion du fil de phase (4) avant de déconnecter l'interface de terre (10a) de l'entrée de terre (10a).

7. Appareil électrique selon une quelconque revendication précédente, comprenant un moyen de reconnexion pour reconnecter l'interface de terre à l'entrée de terre (10a) et pour initier une reconnexion du fil de phase (4) à l'appareil, dans lequel le moyen de reconnexion est configuré pour reconnecter l'interface de terre à l'entrée de terre (10a) avant d'initier une reconnexion du fil de phase à l'appareil (2').

8. Appareil électrique selon une quelconque revendication précédente, comprenant en outre :
une entrée de phase (4a) destinée à établir une connexion à un fil de phase (4) de l'alimentation électrique à partir du réseau de distribution ; et
une interface de phase destinée à établir une connexion de phase de l'entrée de phase (4a) à l'appareil (2'),
dans lequel le moyen de déconnexion du fil de phase est configuré pour déconnecter l'interface de phase de l'entrée de phase (4a) avant ou en même temps que la déconnexion de l'interface de terre de l'entrée de terre (10a).

9. Appareil électrique selon l'une quelconque des revendications 1 à 7, dans lequel le moyen de déconnexion du fil de phase est configuré pour transmettre un signal analogique ou numérique à un appareil de commande séparé, ne faisant pas partie de l'appareil électrique, afin d'ordonner à l'appareil de commande séparé de déconnecter l'appareil (2') du fil de phase de l'alimentation électrique.

10. Appareil électrique selon l'une quelconque des revendications 1 à 7, dans lequel le moyen de déconnexion du fil de phase (42, 52') comprend un actionneur mécanique destiné à manoeuvrer un moyen de commutation, ne faisant pas partie de l'appareil électrique, afin de déconnecter le fil de phase (4) de l'alimentation électrique.

11. Appareil électrique selon une quelconque revendication précédente, dans lequel le moyen de déconnexion du fil de terre comprend un contacteur, un actionneur ou un relais à commande électrique.

12. Appareil électrique selon une quelconque revendication précédente, dans lequel le moyen de déconnexion du fil de terre (48, 50', 54) et le moyen de déconnexion du fil de phase (42, 52') comprennent des circuits de commande configurés pour recevoir un signal provenant du moyen de détection de courant et pour déterminer à quel moment le courant détecté satisfait la condition de déconnexion du fil de terre.

13. Appareil électrique selon une quelconque revendication précédente, configuré pour émettre un signal visuel ou audible lorsque la condition de déconnexion du fil de terre est satisfaite.

14. Appareil électrique selon une quelconque revendication précédente, configuré pour établir une connexion au fil de terre d'un conducteur de protection et de neutre (PEN) d'une alimentation électrique TN-C-S.

15. Procédé de commande d'une alimentation électrique vers un appareil, comprenant les étapes consistant à :
détecter un flux de courant à travers un conducteur de terre (10b) connecté entre un fil de terre (10), d'une alimentation électrique à partir d'un réseau de distribution, et un appareil (2') ;
déterminer que le flux de courant détecté satisfait une condition de déconnexion du fil de terre et, en réponse, déconnecter l'appareil du fil de terre (10) de l'alimentation électrique ; et
déconnecter l'appareil (2') d'un fil de phase (4) de l'alimentation électrique avant ou en même temps que la déconnexion de l'appareil (2') du fil de terre (10) ; et
**caractérisé en ce qu'**il empêche, au moyen d'un interverrouillage (70), la connexion de l'appareil (2') au fil de phase (4) de l'alimentation électrique jusqu'après que l'appareil (2') a été connecté au fil de terre (10) de l'alimentation électrique.
